# EUROPEAN PATENT SPECIFICATION

(11) **EP 3 238 359 B1**
(45) Date of publication and mention of the grant of the patent: **18.05.2022**
(21) Application number: 15819985.1
(22) Date of filing: 11.12.2015
(51) Int. Cl.: H04L 5/00, H04L 1/18, H04L 27/00

(54) **JOINT PROCESSING OF TRANSPORT BLOCKS ON MULTIPLE COMPONENT CARRIERS FOR CA (CARRIER AGGREGATION) AND LAA (LICENSE ASSISTED ACCESS)**
GEMEINSAME VERARBEITUNG VON TRANSPORTBLÖCKEN AUF MEHRKOMPONENTENTRÄGERN FÜR TRÄGERAGGREGATION UND LIZENZUNTERSTÜTZTEN ZUGANG
TRAITEMENT CONJOINT DE BLOCS DE TRANSPORT SUR DE MULTIPLES PORTEUSES DE COMPOSANTES POUR UNE AGRÉGATION DE PORTEUSE (CA) ET UN ACCÈS ASSISTÉ AUTORISÉ (LAA)

(30) Priority: 22.12.2014 US 201462095217 P
(43) Date of publication of application: 01.11.2017
(73) Proprietor: Apple Inc., Cupertino, CA 95014 (US)
(72) Inventor: XIONG, Gang, Beaverton, OR 97006 (US); HE, Hong, Beijing Heilongjiang 100190 (CN); KWON, Hwan-Joon, Santa Clara, CA 95054 (US); FWU, Jong-Kae, Sunnyvale, CA 94087 (US)
(74) Representative: Barnfather, Karl Jon
(86) International application number: PCT/US2015/065254
(87) International publication number: WO 2016/105978

(56) References cited:
- ERICSSON: "Carrier aggregation in LTE-Advanced", 3GPP DRAFT; R1-082468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110739, [retrieved on 2008-06-24]
- PANASONIC: "Transport block mapping and PDCCH signaling for carrier aggregation", 3GPP DRAFT; R1-082995, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316458, [retrieved on 2008-08-12]
- ETRI: "A/N codebook adaptation for CA", 3GPP DRAFT; R1-104666 AN CODEBOOK ADAPTATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449943, [retrieved on 2010-08-17]
- MOTOROLA: "RV definition for UL HARQ", 3GPP DRAFT; R1-080059 - ULRVDEFINITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080109, 9 January 2008 (2008-01-09), XP050108598, [retrieved on 2008-01-09]
- ERICSSON: "Carrier aggregation in LTE-Advanced", 3GPP DRAFT; R1-082468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110739,
- PANASONIC: "Transport block mapping and PDCCH signaling for carrier aggregation", 3GPP DRAFT; R1-082995, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316458,
- ETRI: "A/N codebook adaptation for CA", 3GPP DRAFT; R1-104666 AN CODEBOOK ADAPTATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449943,
- MOTOROLA: "RV definition for UL HARQ", 3GPP DRAFT; R1-080059 - ULRVDEFINITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080109, 9 January 2008 (2008-01-09), XP050108598,

## Description

### REFERENCE TO RELATED APPLICATIONS

This application claims the benefit of U.S. Provisional Application No. 62/095,217 filed December 22, 2014, entitled "METHOD ON JOINT PROCESSING OF TRANSPORT BLOCKS ON MULTIPLE COMPONENT CARRIERS FOR CA AND LAA"

### FIELD

The present disclosure relates to wireless technology, and more specifically to techniques for joint processing of the same transport block on more than one carrier in a wireless system.

### BACKGROUND

Carrier Aggregation (CA) involves the use of multiple component carriers (CCs) to transmit to a user equipment (UE), thereby increasing the bandwidth (and bitrate) available for transmission to the UE. Support for CA in the LTE (Long Term Evolution) specification began in release 10 of the LTE specification (Rel-10) with the basic CA feature support, enabling aggregation of up to 5 CCs of the same frame structure. With the tremendous growth of LTE capable devices, many LTE deployments are becoming capacity limited due to interference and the volume of data delivered. 3GPP (the Third Generation Partnership Project) is considering support for wider spectrum bands at the UE side to boost the peak data rate performance by standardizing enhanced CA operations with an increased number of carriers (e.g., up to 16 or 32 CCs) in the C-band (3.4-4.2 GHz) licensed band and 5 GHz (with -500 MHz of unlicensed spectrum) for LAA (license assisted access) to provide more resources for data capabilities and better manage interference.

Document ERICSSON: "Carrier aggregation in LTE-Advanced", 3GPP DRAFT; R1-082468, (2008-06-24) proposes the use of one transport block (and one HARQ process) in total across multiple (component) carriers.

Document MOTOROLA: "RV definition for UL HARQ", 3GPP DRAFT; R1-080059, (2008-01-09) discusses non-adaptive HARQ operation and the design of RV sequences and rate-matching based on a circular buffer.

The invention is defined by the appended claims. An apparatus within an Evolved NodeB (eNB) and an apparatus within a UE are defined by appended claims 1 and 8 respectively.

### BRIEF DESCRIPTION OF THE DRAWINGS

**FIG. 1** is a block diagram illustrating an example user equipment (UE) useable in connection with various aspects described herein.
**FIG. 2** is a block diagram of a system employable in an enhanced node B (eNB) or other base station that facilitates joint processing of a common transport block (TB) on more than one carrier according to various aspects described herein.
**FIG. 3** is a block diagram of a system employable in a UE that facilitates joint processing of a common transport block (TB) on more than one carrier according to various aspects described herein.
**FIG. 4** is a flow diagram illustrating a method of facilitating joint processing of a common TB for downlink (DL) at an eNB according to various aspects described herein.
**FIG. 5** is a flow diagram illustrating a method of facilitating joint processing of a common TB for uplink (UL) at an eNB according to various aspects described herein.
**FIG. 6** is a flow diagram illustrating a method of facilitating joint processing of a common TB for DL at a UE according to various aspects described herein.
**FIG. 7** is a flow diagram illustrating a method of facilitating joint processing of a common TB for UL at a UE according to various aspects described herein.
**FIG. 8** is a pair of diagrams illustrating a comparison between individual processing of TBs and joint processing of TBs according to various aspects described herein.
**FIG. 9** is a pair of diagrams illustrating two options for the starting positions of successive carriers in the circular buffer for rate matching according to various aspects described herein.
**FIG. 10** is a diagram illustrating use of a single PDCCH (physical downlink control channel) for scheduling joint transmission of a common TB in multiple carriers according to various aspects described herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

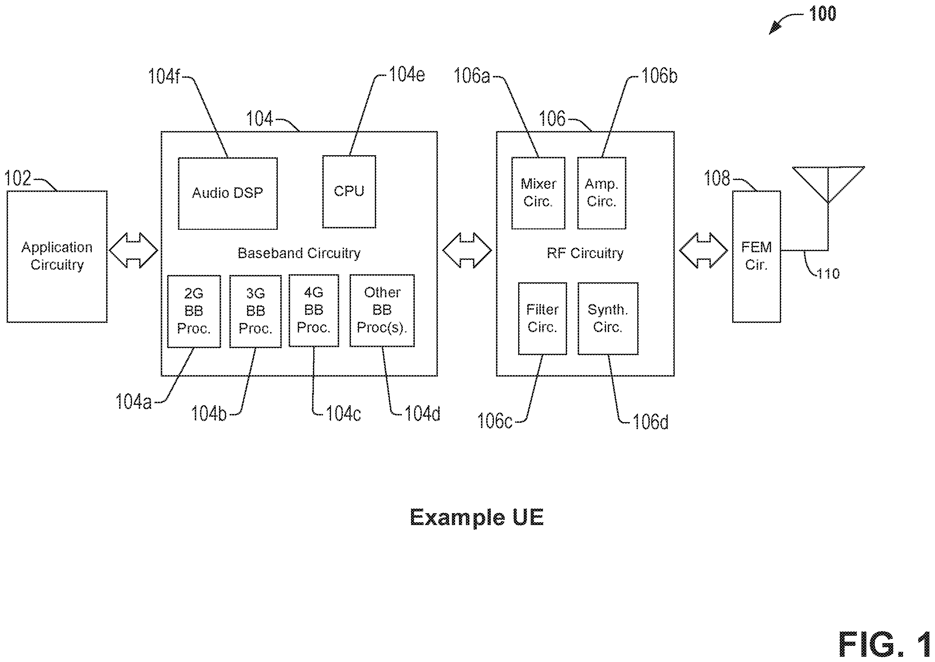

Embodiments described herein may be implemented into a system using any suitably configured hardware and/or software. **FIG. 1** illustrates, for one embodiment, example components of a User Equipment (UE) device 100. In some embodiments, the UE device 100 may include application circuitry 102, baseband circuitry 104, Radio Frequency (RF) circuitry 106, front-end module (FEM) circuitry 108 and one or more antennas 110, coupled together at least as shown.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some dual-mode embodiments, a separate radio IC circuitry may be provided for processing signals for each spectrum, although the scope of the embodiments is not limited in this respect.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110.

In some embodiments, the UE device 100 may include additional elements such as, for example, memory/storage, display, camera, sensor, and/or input/output (I/O) interface.

In accordance with various embodiments described herein, techniques can be employed to facilitate joint transmission of transport blocks on more than one carrier via either a carrier aggregation (CA) or license assisted access (LAA) mode of operation, which can provide improved spectral efficiency and gain, for example, for cell edge users.

In Rel-10, PDCCH (the physical downlink control channel) for each CC scheduling is individually encoded and transmitted. Cross-carrier scheduling is supported for up to 5 CCs, whereby a PDCCH scheduling a PDSCH (physical downlink shared channel) on a CC may come from a different CC. With a large number of aggregated CCs and a growing number of active CA capable UEs, a large PDCCH overhead may be incurred, especially when considering a typical scenario wherein a limited number of CCs on a licensed band (e.g. 1 CC) convey all DL/UL control signaling for all CCs (e.g., 16 or 32 CCs) on licensed and/or unlicensed bands. Each PDCCH occupies at least one CCE (control channel element) for its transmission. When there are numerous UEs in the network, PDCCH overhead may be a bottleneck on scheduling the transmission of data channel on multiple CCs.

In various aspects discussed herein, a compact DCI format which contains scheduling information for multiple CCs can be employed to reduce the PDCCH overhead. In particular, several CC-specific information fields within DCI formats can be shared/common across all or a subset of configured CCs, e.g. a band-specific compact DCI design. The compact DCI format can include scheduling information for each of the CCs, and can including a CC index (CIF) for joint processing of the multiple CCs.

Various embodiments discussed herein can employ techniques for joint processing of transport blocks on multiple CCs which can facilitate efficient CA operation to support a large number of CCs. In aspects, these techniques can allow multiple CCs to transmit or receive the same transport block(s), which can help to improve the spectral efficiency (e.g., at cell edge users, etc.) due to potential frequency diversity gain. In some aspects, a single PDCCH can be employed to schedule the PDSCH transmission or PUSCH (physical uplink shared channel) reception on multiple CCs, and in such aspects, certain CC-specific information fields (e.g., HARQ (hybrid automatic repeat request) process number, redundancy version (RV) and new data indicator (NDI), etc.) can be designed as common fields so as to further reduce the PDCCH overhead and consequently increase the PDCCH capacity. In addition, techniques employed herein can also allow single HARQ ACK/NACK (acknowledgement/negative acknowledgement) feedback on the Pcell, which can help to increase HARQ ACK/NACK capacity in the system.

In various aspects discussed herein, transport blocks (TBs) are referred to as either 1 transport block (in the case of single codeword transmission) or 2 transport blocks (in the case of two codeword transmission). Additionally, the proposed scheme can apply for both CA and licensed assisted access (LAA) operation.

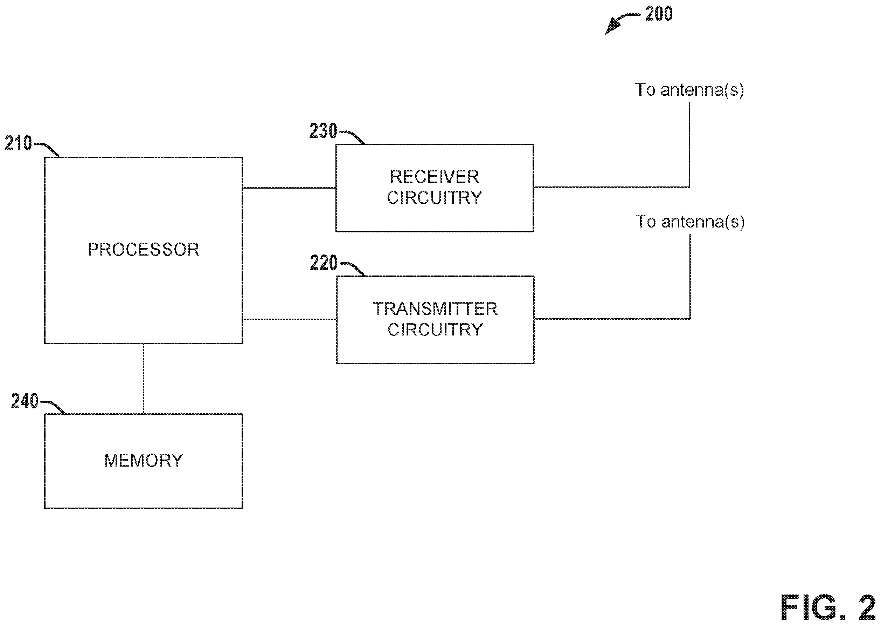

Referring to **FIG. 2****,** illustrated is a block diagram of a system 200 that facilitates joint processing of one or more common transport block (TBs) on more than one carrier at a base station according to various aspects described herein. System 200 can include a processor 210, transmitter circuitry 220, optional receiver circuitry 230, and memory 240. In various aspects, system 200 can be included within an Evolved Universal Terrestrial Radio Access Network (E-UTRAN) Node B (Evolved Node B, eNodeB, or eNB) or other base station in a wireless communications network. As described in greater detail below, system 200 can facilitate joint processing of common TBs on multiple carriers, which can improve gain for cell edge users, etc.

In various embodiments, system 200 can be configured for joint processing of transmission blocks in connection with one or both of a downlink (DL) mode or an uplink (UL) mode.

Although, as discussed herein, joint processing can involve simultaneous transmission of 1 or 2 TBs depending on the number of codewords, the processing of each TB is similar, thus the discussion herein focuses on techniques for processing one TB. In aspects wherein two TBs are processed, each can be independently processed in a similar manner.

In accordance with either the UL mode or DL mode (or both), processor 210 can determine to employ joint processing in DL communications with a UE (e.g., via a scheduling algorithm at a scheduler in the eNB, etc.). Processor 210 can configure the UE for joint processing by generating higher layer signaling (e.g., via a system information block (SIB), UE-specific RRC (radio resource control) signaling, etc.). In various aspects, joint processing can be configured independently or simultaneously for the UL mode or the DL mode. For joint transmission over a plurality of carriers, processor 210 can determine a primary carrier of the plurality of carriers, which can also be configured to the UE via higher layer signaling (e.g., RRC). Transmitter circuitry 220 can transmit the higher layer signaling configuring the UE for joint processing and for the determined primary carrier.

In the DL mode, processor 210 can generate a common transport block (TB) for transmission to the UE via joint processing, which can comprise some data payload to be sent to the UE. Based on the common TB, processor 210 can generate a physical layer encoding for each carrier of a plurality of carriers. In some aspects, the plurality of carriers can comprise a plurality of component carriers (CCs) for carrier aggregation (CA) (e.g., with a primary CC and one or more secondary CCs). In the same or other aspects, the plurality of carriers can comprise one or more unlicensed carriers (e.g., comprising an unlicensed frequency range) and one or more licensed carriers (e.g., comprising a licensed frequency range) for license assisted access (LAA). The plurality of carriers can comprise substantially any number of carriers, although compliance with standards or the capabilities of devices (e.g., a UE designated to receive the transmission) may, in various scenarios, limit the number of carriers (e.g., to 2, 5, 16, 32, etc.) actually employed for joint transmission to a single UE. Processor 210 can schedule each of the physical layer encodings on one of the plurality of carriers to an associated set of physical resources (e.g., time/frequency resources, etc.), and can generate one or more control channel messages (e.g., PDCCH (physical downlink control channel) or ePDCCH (enhanced PDCCH) DCI (downlink control information) messages) associated with the physical layer encodings and providing information that facilitates location and decoding of the physical layer encodings. In some aspects, a single (e)PDCCH (i.e., PDCCH or ePDCCH) can be employed, with control channel messages only on a primary carrier of the plurality of carriers. In other aspects, independent ePDCCH can be employed, wherein each carrier used for joint transmission of the common TB can have a control channel message associated with the physical layer encoding to be transmitted on that carrier.

The control channel messages can employ an existing format (which can, in aspects, be modified to incorporate one or more bits to indicate joint processing of a common TB) or a compact format that can facilitate scheduling multiple carriers via a single message. Control channel messages in the DL mode can vary based on whether single or independent messaging is employed. For example, in aspects employing single messaging (e.g., a single (e)PDCCH message on a primary carrier), one or more fields of the single message can be common fields that can apply to each of the physical layer encodings, such as a common redundancy version (RV), a common HARQ process number, a common new data indicator (NDI), etc. In aspects in which a common RV is employed, the starting position in the circular buffer for rate-matching for each of the carriers (except a first (e.g., primary) carrier) can be aligned with the ending position for another carrier, and the primary carrier can have a starting position indicated via the common RV (e.g., RV 0, etc.). Alternatively, each carrier can employ the same starting position indicated via the common RV, which can facilitate coherent combining at the UE. In aspects involving individual (e)PDCCH for each carrier, each can have the same or distinct RVs, etc. Where common RVs are employed, it can facilitate coherent combining, as discussed, and where distinct RVs are employed, each carrier can have a starting position as indicated by the associated RV.

In the DL mode, transmitter circuitry 220 can transmit the one or more control channel messages and the physical layer encodings. Transmitter circuitry 220 can transmit each physical layer encoding via the associated set of physical resources in which it is scheduled (e.g., with one encoding per carrier on some or all of the plurality of carriers, etc.). As noted above, either a single (e)PDCCH can be employed, wherein the control channel messages can be transmitted on a primary carrier, or independent (e)PDCCH can be employed, wherein a control channel message can be transmitted on each carrier on which a physical layer encoding of the common TB is transmitted. The multiple physical layer encodings of the common TB can provide a diversity gain at the UE, which can reduce retransmission, especially to cell edge UEs.

In the DL mode, receiver circuitry 230 can receive a common hybrid automatic repeat request (HARQ) message associated with the physical layer encodings of the common TB, which can substantially reduce the amount of HARQ signaling compared with conventional CA and LAA techniques. If appropriate (e.g., the HARQ message comprises a negative acknowledgement (NACK)), system 200 can retransmit at least a portion of the common TB.

Additionally, joint processing of a common TB can be employed simultaneously with independent processing of multiple TBs (e.g., in accordance with conventional CA or LAA modes, etc.). In such aspects, processor 210 can independently process and schedule distinct TBs, wherein each carrier can have resources scheduled for a physical layer encoding of a common TB for joint processing, a distinct TB for individual processing of TBs (e.g., in accordance with conventional CA or LAA modes, etc.), or both. In these aspects, transmitter circuitry 220 can transmit the encodings of the multiple TBs via physical resources scheduled for respective TBs, and receiver circuitry 230 can receive HARQ messages associated with each TB, still providing a reduction in overhead for TBs transmitted as common TBs via a joint processing mode. In some aspects, multiple jointly processed TBs can be processed independently from one another (e.g., with or without one or more additional independently processed TBs that are not jointly processed).

In either the DL mode, UL mode, or both, memory 240 can store instructions and/or other data associated with one or more of processor 210, transmitter circuitry 220, or receiver circuitry 230. In various aspects, memory 240 can comprise any of a variety of storage mediums.

In the UL mode, processor 210 can schedule one or more UEs for joint transmission, wherein each UE for joint transmission can be scheduled on a plurality of carriers, each associated with a distinct frequency range (e.g., one or more of which can be unlicensed, in LAA aspects). For each of the plurality of carriers to be employed for joint transmission, processor 210 can schedule a set of physical resources in a physical uplink shared channel (PUSCH). Processor 210 can additionally generate one or more control channel messages (e.g., single or independent messages that indicate uplink grants associated with the UE and the scheduled sets of physical resources.

In the UL mode, transmitter circuitry 220 can transmit the one or more control channel messages that indicate the uplink grants (e.g., via single or independent messaging as described herein), as well as higher layer signaling to configure the UE for joint transmission, to designate a primary carrier, etc.

In the UL mode, receiver circuitry 230 can receive transmissions from the UE via the scheduled sets of physical resources in the plurality of carriers. Because the UE was configured for joint transmission via the scheduled sets of physical resources, each of the transmissions received via the scheduled sets of physical resources can be a physical layer encoding of a common TB sent by the UE (in aspects, as discussed elsewhere herein, other multi-carrier transmission modes can also be simultaneously employed with the joint transmission mode discussed herein).

Based on the received transmissions, processor 210 can perform decoding to attempt to recover the common TB. Each of the physical layer encodings can be self-decodable, thus, in some situations, processor 210 may decode one (or a subset) of the received transmissions to successfully recover the common TB (and can discard the rest, to avoid unnecessary processing). In other aspects, processor 210 may only recover the common TB with attempted decoding of all of the received transmissions, or may not successfully recover the common TB. Processor 210 can generate a common HARQ message that can comprise an ACK (acknowledgement) if the common TB was successfully recovered, or a NACK (negative acknowledgement) if the common TB was not successfully recovered.

In the UL mode, transmitter circuitry 220 can transmit the common HARQ message via a physical HARQ indicator channel (PHICH) on a primary carrier. The HARQ message can have a PHICH resource index that can be based on an index of the first resource block indicated in the uplink grant for the scheduled set of physical resources in the primary carrier, can be based on a cyclic shift indicated via that uplink grant, or a combination thereof.

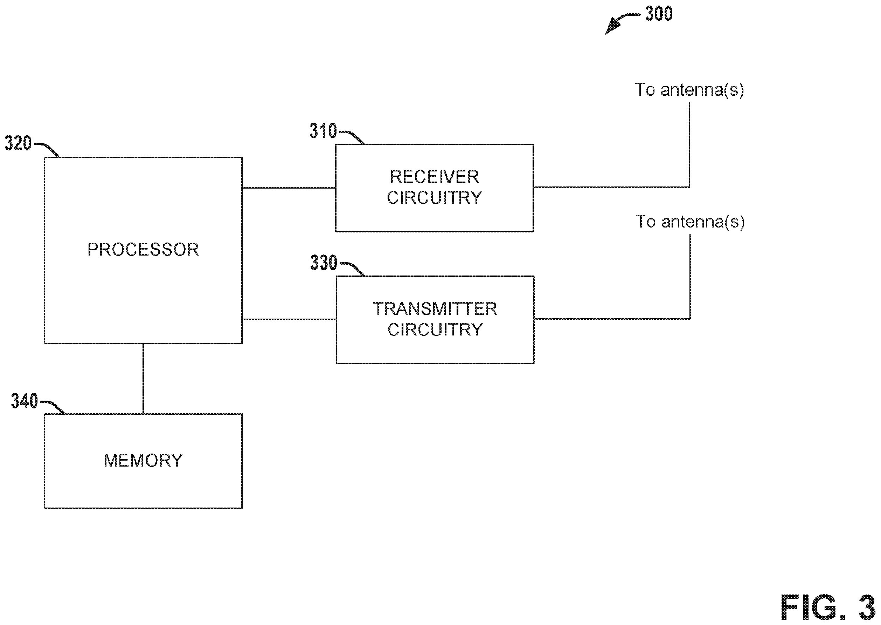

Referring to **FIG. 3****,** illustrated is a block diagram of a system 300 that facilitates joint processing of one or more common transport block (TBs) on more than one carrier at a mobile terminal according to various aspects described herein. System 300 can include receiver circuitry 310, a processor 320, transmitter circuitry 330, and a memory 340 (which can comprise any of a variety of storage mediums and can store instructions and/or data associated with one or more of receiver circuitry 310, processor 320, or transmitter circuitry 330). In various aspects, system 300 can be included within a user equipment (UE). As described in greater detail below, system 300 can facilitate joint processing of transmission blocks in connection with one or both of a DL mode or an UL mode.

In either or both of the UL mode or the DL mode, receiver circuitry 310 can receive higher layer signaling (e.g., via SIB, RRC, etc.) that indicates a joint transmission mode (alternatively, the joint transmission mode can be indicated via DCI). In aspects, the received configuration via higher layer signaling (e.g., RRC) can also indicate details regarding the joint transmission mode, such as whether single or independent ePDCCH messaging will be employed, etc. Additionally, receiver circuitry 310 can receive one or more control channel messages (e.g., via single messaging (e.g., which can employ a compact DCI format discussed herein) or independent messaging as discussed herein, etc.) that indicate a plurality of DL assignments in a plurality of carriers for the UE employing system 300. The plurality of DL assignments can include a scheduled set of physical resources in each of the plurality of carriers. Receiver circuitry 310 can receive transmissions via the scheduled sets of physical resources. Because the UE was configured for joint transmission via the scheduled sets of physical resources, each of the transmissions received via the scheduled sets of physical resources can be a physical layer encoding of a common TB sent by the eNB (as discussed above, in aspects, other transmission modes (e.g., independent processing of additional TBs, etc.) can also be employed, involving one or more of the plurality of carriers for joint transmission, other carriers, or a combination thereof).

In the DL mode, processor 320 can attempt recovery of the common TB by performing decoding on one or more of the received transmissions. For example, if the common TB is successfully recovered after attempted decoding of less than all of the received transmissions, the remaining transmissions can be discarded to minimize the processing load on processor 320.

In the DL mode, transmitter circuitry 330 can transmit a single common HARQ message in response to the received transmissions, which can comprise an ACK if processor 320 successfully recovered the common TB, and a NACK if not. Transmitter circuitry 330 can transmit the single common HARQ message via a physical uplink control channel (PUCCH), and it can have a PUCCH resource index that can depend at least in part on a first CCE (control channel element) of the control channel message that indicates a DL assignment in a primary carrier of the plurality of carriers.

In the DL mode, if independent processing of a second TB is also employed (e.g., if also configured for a CA mode involving independent processing), receiver circuit 310 can additionally receive control channel messages that indicate one or more DL assignments associated with one or more independently processed TBs, which can optionally include one or more additional common TBs. For additional TBs, reception, decoding, and HARQ messaging can proceed in parallel to that described above for the common TB, and transmitter circuitry 330 can transmit a separate HARQ message for each independent TB (including any that are also designated for joint processing, e.g., a second common TB, etc.).

In the UL mode, receiver circuitry 310 can receive configuration via higher layer signaling, as in the DL mode. Additionally, receiver circuitry 310 can receive one or more control channel messages (e.g., via single or independent (e)PDCCH messaging, as discussed herein) that can indicate one or more UL grants, wherein each UL grant can indicate a scheduled set of physical resources in a carrier of the plurality of carriers.

In the UL mode, processor 320 can generate a common TB and generate a physical layer encoding of the common TB for each of the plurality of carriers designated for joint transmission.

In the UL mode, transmitter circuitry 330 can transmit each of the physical layer encodings via the scheduled set of physical resources in the associated carrier.

In the UL mode, receiver circuitry 330 can also receive a HARQ message indicating an ACK or NACK via a PHICH on a primary carrier in response to the joint transmission of the common TB. The PHICH resource index can be as described above in connection with system 200.

As with other systems and modes discussed herein, in the UL mode, system 300 can, in aspects, additionally perform independent processing of one or more independent TBs for transmission (some or all of which can be optionally jointly processed).

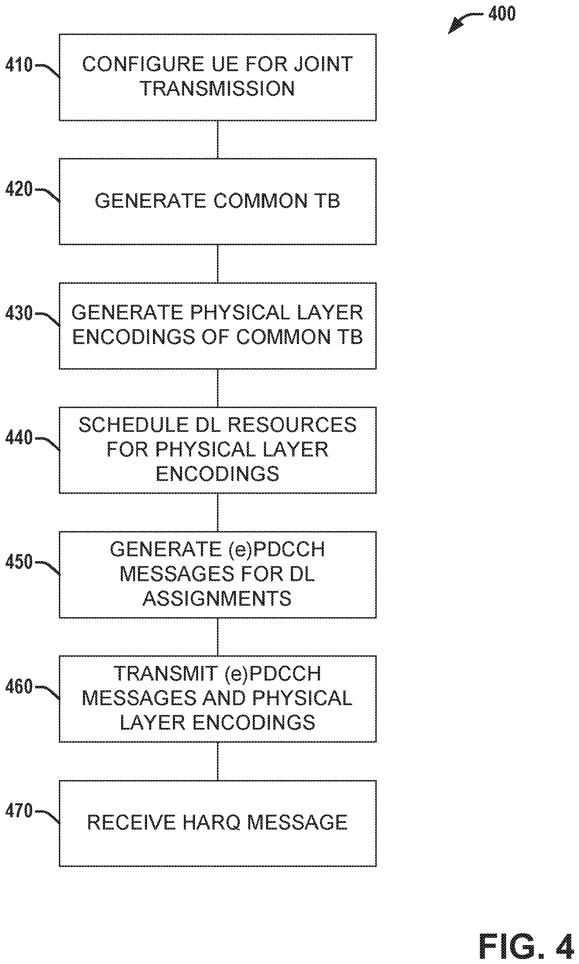

Referring to **FIG. 4****,** illustrated is a flow diagram of a method 400 of facilitating joint processing of a common TB for DL at an eNB according to various aspects described herein.

At 410, a UE can be configured for a joint transmission mode, for example, via higher layer signaling (e.g., via SIB or RRC) or via DCI messaging.

At 420, a common TB can be generated that comprises data to be transmitted to the UE.

At 430, a physical layer encoding of the common TB can be generated for each of a plurality of carriers to be employed for the joint transmission.

At 440, DL resources can be scheduled for the joint transmission in each of the plurality of carriers (e.g., a scheduled set of physical resources in each carrier).

At 450, one or more control channel messages (e.g., (e)PDCCH messages) can be generated (e.g., via single or independent messaging as discussed herein) that indicate the assigned DL resources scheduled for the joint transmission.

At 460, the one or more control channel messages can be transmitted (e.g., via a primary carrier or each carrier of the plurality of carriers), along with the physical layer encodings (which can be transmitted via the scheduled sets of physical resources).

At 470, a HARQ message can be received from the UE indicating whether the common TB was successfully decoded (ACK) or not (NACK). If not, at least a portion of the common TB can be retransmitted.

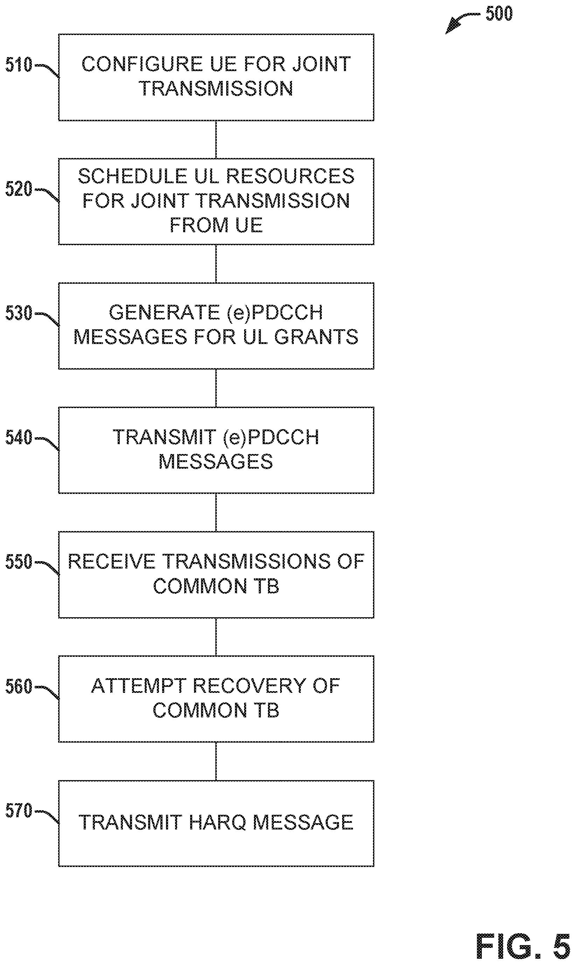

Referring to **FIG. 5****,** illustrated is a flow diagram of a method 500 of facilitating joint processing of a common TB for UL at an eNB according to various aspects described herein.

At 510, a UE can be configured for a joint transmission mode, for example, via higher layer signaling (e.g., via SIB or RRC) or via DCI messaging.

At 520, UL resources can be scheduled for joint transmission by the UE in each of a plurality of carriers (e.g., a scheduled set of physical resources in each carrier).

At 530, one or more control channel messages (e.g., (e)PDCCH messages) can be generated (e.g., via single or independent messaging as discussed herein) that indicate the UL grants and resources scheduled for the joint transmission.

At 540, the one or more control channel messages can be transmitted to the UE.

At 550, transmissions of physical layer encodings of a common TB can be received from the UE on the plurality of carriers via the scheduled sets of physical resources.

At 560, decoding can be performed on at least one of the received transmissions to attempt recovery of the common TB.

At 570, a HARQ message can be transmitted to the UE indicating whether the common TB was successfully decoded (ACK) or not (NACK).

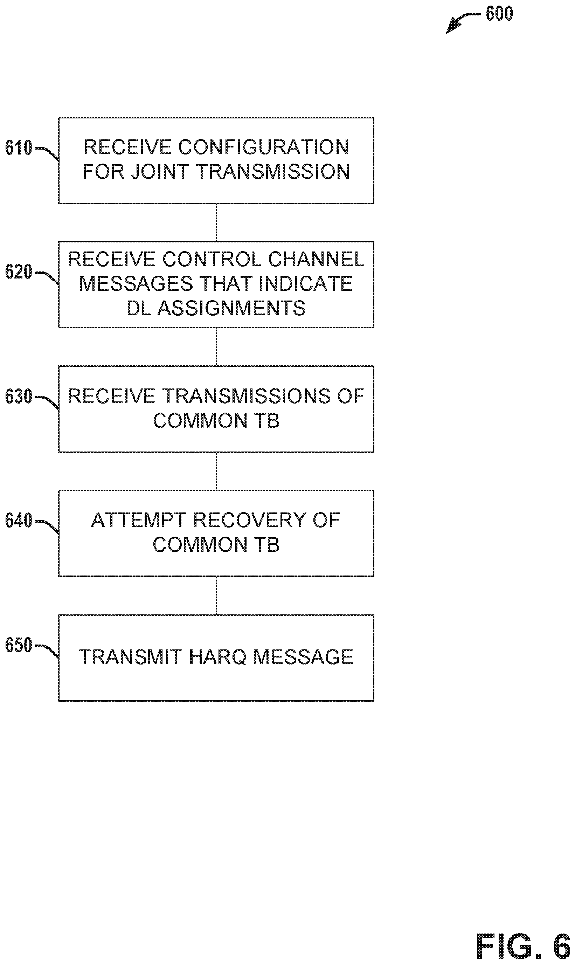

Referring to **FIG. 6****,** illustrated is a flow diagram of a method 600 of facilitating joint processing of a common TB for DL at a UE according to various aspects described herein.

At 610, the UE can be configured for a joint transmission mode, for example, via higher layer signaling (e.g., via SIB or RRC) or via DCI messaging.

At 620, one or more control channel messages (e.g., via single or independent messaging) can be received indicating DL assignments with associated scheduled sets of physical resources in a plurality of carriers.

At 630, transmissions can be received via the scheduled sets of physical resources. Because the resources were configured for the joint transmission mode, each of the received transmissions can be a physical layer encoding of a common TB sent via the joint transmission mode.

At 640, decoding can be performed on at least one of the received transmissions to attempt recovery of the common TB.

At 650, a HARQ message can be transmitted to the eNB indicating whether the common TB was successfully decoded (ACK) or not (NACK).

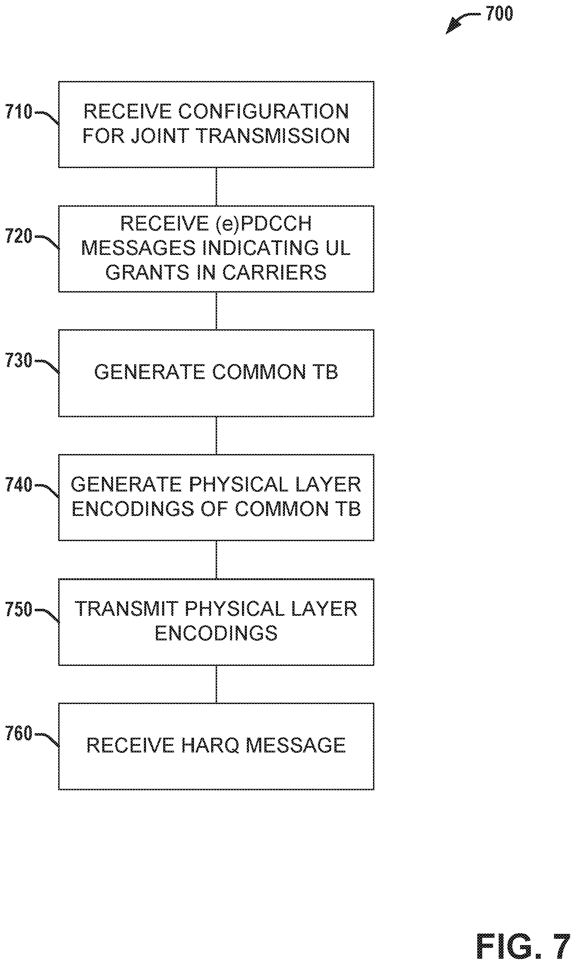

Referring to **FIG. 7****,** illustrated is a flow diagram of a method 700 of facilitating joint processing of a common TB for UL at a UE according to various aspects described herein.

At 710, the UE can be configured for a joint transmission mode, for example, via higher layer signaling (e.g., via SIB or RRC) or via DCI messaging.

At 720, one or more control channel messages (e.g., via single or independent messaging) can be received indicating UL grants and associated scheduled sets of physical resources in a plurality of carriers.

At 730, a common TB can be generated that comprises data to be transmitted by the UE.

At 740, a physical layer encoding of the common TB can be generated for each of a plurality of carriers to be employed for the joint transmission.

At 750, the physical layer encodings can be transmitted to an eNB via the scheduled sets of physical resources.

At 760, a HARQ message can be received from the eNB indicating whether the common TB was successfully decoded (ACK) or not (NACK). If not, at least a portion of the common TB can be retransmitted.

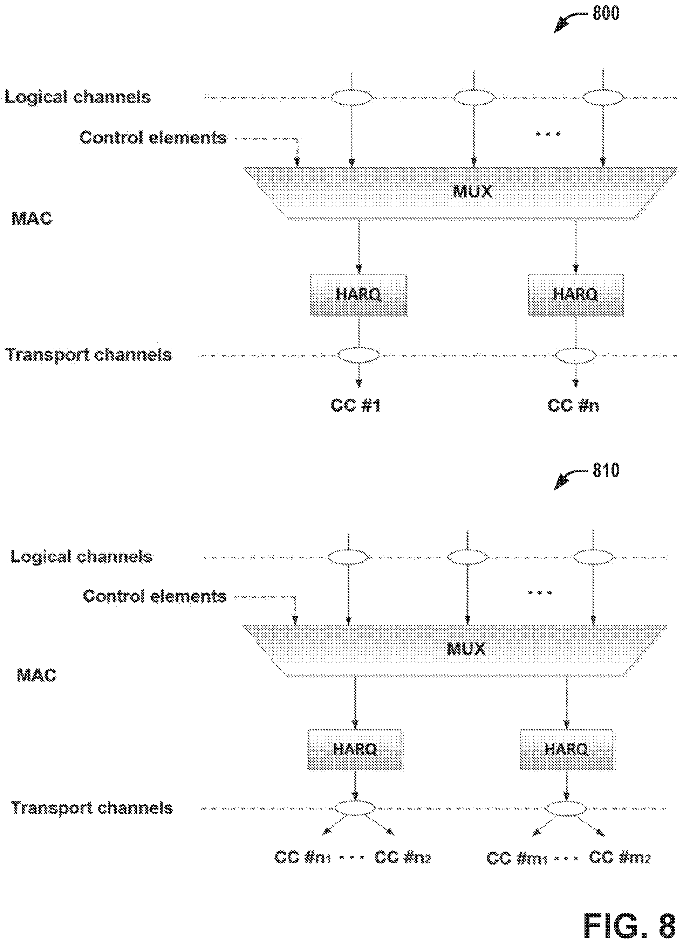

Referring to **FIG. 8****,** illustrated is a pair of diagrams showing a comparison between individual processing of TBs and joint processing of TBs according to various aspects described herein. In a conventional LTE system, the basic principle for CA is independent processing of the CCs in the physical layer, including control signaling, scheduling and HARQ retransmissions, while CA is invisible to Radio-Link Control (RLC) and Packet Data Convergence Protocol (PDCP). As seen at 800, MAC multiplexing functionality is also responsible for handling of multiple CCs in the case of CA, where logical channels, including any MAC control elements, are multiplexed to form one (two in the case of spatial multiplexing) transport blocks per CC with each CC maintaining its own HARQ entity.

The existing LTE mechanism, with independent processing of transport blocks on each CC, may not be efficient for the support of a large number of CCs as planned for LTE developments in the near future. In particular, as PDCCH for each CC scheduling is individually encoded and transmitted, this introduces substantial PDCCH control overhead, especially in heavily-loaded system with a large number of CA capable devices in the network. In this case, PDCCH overhead may be a bottleneck on scheduling the transmission of data channel on multiple CCs.

To address these issues, various embodiments described herein can employ joint processing of transport blocks to allow multiple CCs to transmit or receive the same transport blocks using a single HARQ entity. In FIG. 8, diagram 810 illustrates a technique for joint processing of the transport blocks on multiple CCs that can facilitate efficient CA operation. For example, the scheduler in the eNB can jointly select resource on multiple CCs according to the radio link conditions. Further, the number of PRBs (physical resource blocks) used for the transmission of transport blocks can be different from each CC. For instance, 6 PRBs can be allocated in a first CC, while 10 PRBs can be allocated in a second CC.

The CCs used for the joint processing in accordance with various aspects described herein can be configured by higher layers via SIB (system information block) or UE-specific dedicated RRC (radio resource control) signaling. In various aspects, each CC can operate in a conventional CA mode with independent processing of the transport blocks and/or in the proposed mode with joint processing of the transport blocks. For example, a first CC can operate only in the existing mode with independent processing of the transport blocks, a second CC can operate both in the existing mode and in the mode discussed herein with joint processing of the transport blocks; and a third CC can operate only in the joint processing mode discussed herein. In addition, the second and third CCs can be configured to jointly process the same transport blocks using a single HARQ entity.

From the perspective of a UE, a primary CC can be defined when joint processing is configured. This primary CC can be configured by higher layers, e.g., via dedicated RRC signaling. This primary CC can be used to transmit the PDCCH (physical downlink control channel) or ePDCCH (enhanced PDCCH) for scheduling of the transport blocks when a single (e)PDCCH is used as described herein. In various embodiments, a RV (redundancy version) of 0 can be used in this primary CC for the transmission of transport blocks, which can facilitate robust decoding of the data channel.

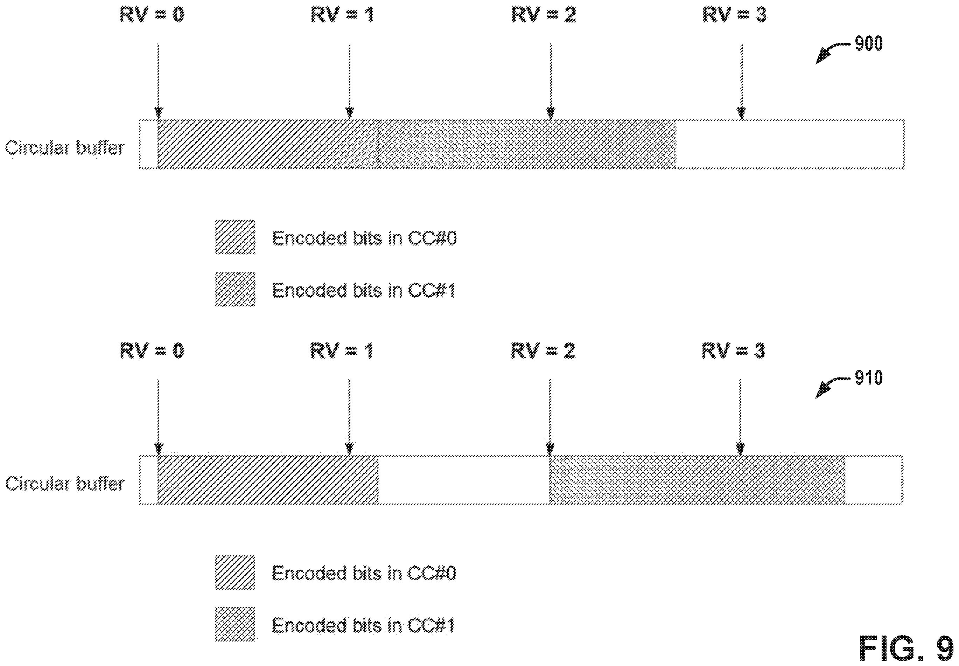

Referring to **FIG. 9****,** illustrated is a pair of diagrams illustrating two options for the starting positions of successive carriers in the circular buffer for rate matching according to various aspects described herein. As can be seen in FIG. 9, several options can be employed for the starting position of circular buffer for rate-matching for each CC.

In a first option employable in various embodiments, the starting position in the circular buffer for rate-matching for each CC can be aligned with each other. Thus, the starting position for rate-matching for a first CC can be aligned with the starting position as defined for the RV indicated in the DCI (downlink control information) format. The starting position for rate-matching for a second CC can follow the last position of rate-matching for the first CC, and so on for additional CCs. FIG. 9 illustrates the scenario when the starting position in circular buffer for rate-matching for each CC is aligned with each other at 900.

This option, of aligning the starting positions of successive CCs, can be employed in various embodiments, including embodiments wherein a single PDCCH (or ePDCCH) can be used for scheduling the transmission of transport blocks on multiple CCs. In such embodiments, the MCS (modulation and coding scheme) on each CC may be distinct or the same. The configuration of distinct or the same MCSs can be semi-statically configured by higher layers. When the same MCS is employed, additional overhead reduction on the DCI format can be achieved.

In a second option employable in various embodiments, the starting position in the circular buffer for rate-matching for each CC can be aligned with the starting position as defined for the RV indicated in the DCI format for that CC. FIG. 9 illustrates the scenario wherein the starting position in the circular buffer for rate-matching for each CC is aligned with the starting position as defined for the RVs at 910. In the example shown at 910, the encoded bits for CC#0 starts from RV = 0, while the encoded bits for CC#1 starts from RV = 2, although in various embodiments, the RV for one or both of CC#0 or CC#1 can be the same or can vary.

This second option can also be employed in various embodiments, including embodiments wherein independent PDCCH or ePDCCH is used for scheduling the transmission of the transport blocks on each CC. In various aspects, the RV on each CC may be the same or distinct (the diagram at 910 shows distinct RVs) depending on the decision reached by the scheduler. In the case when the same RVs (e.g., RV = 0) and MCSs are used for multiple CCs, the UE may perform coherent combining for PDSCH decoding. Additionally, the transmission on each CC can be self-decodable. Thus, after successfully decoding the transmission on a first CC, the receiving UE can skip the decoding of the transport blocks on the remaining CC to reduce power consumption.

Several options can also be employed for configuration for joint processing of the transport blocks on multiple CCs.

In a first option, configuration for joint processing of the transport blocks can be predefined for certain CCs or configured via SIB or UE-specific dedicated RRC signaling.

In a second option, configuration for joint processing of the transport blocks can be explicitly signaled in the DCI formats. For example, one additional bit can be included in the uplink grant or the downlink assignment to differentiate joint or independent processing of transport blocks. A UE configured for an indicator field for joint processing of the transport blocks for a given serving cell can assume that the joint processing indicator field is only present in PDCCH located in the UE specific search space.

Additionally, several options can be employed for scheduling on PDCCH for joint processing of the transport blocks on multiple CCs.

In a first option, independent (e)PDCCH can be used for scheduling of the transport block transmission on each CC. In this case, an existing DCI format can be reused for uplink grant or downlink assignment. In addition, cross-carrier scheduling on PDCCH can also apply for the scheduling of the transport block transmission on each CC. As discussed option, one additional bit can be included to differentiate the existing mode with independent processing of the transport blocks and the mode with joint processing of the transport blocks discussed herein.

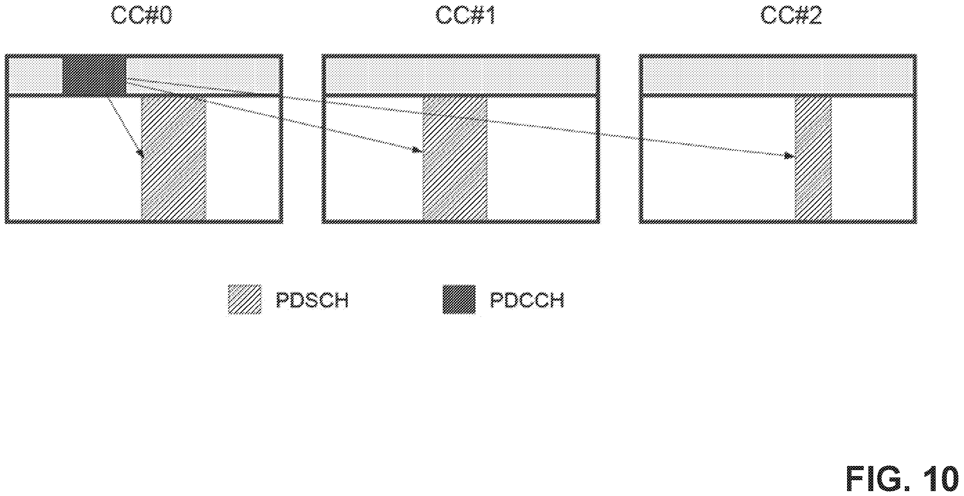

In a second option, a single (e)PDCCH on the primary CC can be used for scheduling of the transport block transmission on multiple CCs. For example, a compact DCI format which contains the scheduling information on multiple CCs can be employed to further reduce the control overhead and consequently, to increase the PDCCH capacity. **FIG. 10** illustrates a diagram of an example scenario wherein a single PDCCH can be used for the scheduling of the transport block transmission on 3 CCs.

In a compact DCI format as in the second option, a CC index (CIF) used for joint processing of the same transport blocks can be included. Additionally, one or more of the HARQ process number, NDI or RV can be designed as common values for multiple CCs. To further reduce overhead, the same MCS can be employed on multiple CCs. Similarly, transmit power control (TPC) for PUCCH (physical uplink control channel) or PUSCH (physical uplink shared channel) transmission on multiple CCs can also be same.

For joint processing of the transport blocks on multiple CCs, certain design changes can be made for the DL and UL HARQ process. Given that one HARQ entity is used for the transmission of the transport blocks, only 1 (one transport block) or 2 (2 transport blocks) ACK/NACK bits can be employed, which can help to increase the HARQ ACK/NACK capacity in the system.

For the DL HARQ process with joint processing of the transport blocks on multiple CCs, ACK/NACK feedback on PUCCH can be transmitted only on the primary cell (PCell). Additionally, if only joint processing of the transport blocks on multiple CCs is configured for a UE, the PUCCH resource index can be given as a function of the first CCE in the (e)PDCCH from the primary CC used to schedule the downlink transmission. This can apply for situations when independent (e)PDCCH or single (e)PDCCH is used for the scheduling of the transport block transmission on multiple CCs. In the former case (independent (e)PDCCH), a rule can be defined in the case when the UE fails to decode the (e)PDCCH on the primary CC.

If both joint and independent processing of the transport blocks on multiple CCs are configured for one UE, both PUCCH format 1b with channel selection and PUCCH format 3 can be supported for ACK/NACK feedback. Additionally, the PUCCH resource index can follow the same principle as in the existing (independent processing only) CA operation.

In one example, when two CCs are configured for a UE for joint processing of the transport blocks, PUCCH format 1a and 1b can be used for the transmission of 1 bit and 2 bits ACK/NACK feedback on the PCell, respectively. As mentioned above, the PUCCH resource index can be given as a function of the first CCE in the (e)PDCCH from the primary CC used to schedule the downlink transmission.

In another example, for one UE, when two CCs (e.g., CC#1 as primary CC and CC#2 as a secondary CC, etc.) are configured for joint processing of a first transport block and another CC (e.g., CC#3) is configured for independent processing of a second transport block, PUCCH format 1b with channel selection can be used for the transmission of ACK/NACK feedback on Pcell. In various aspects, the PUCCH resource index can be determined according to the first CCE of the (e)PDCCH from CC#1 and the acknowledgement resource indicator (ARI) for CC#3.

In the existing LTE specification, the PHICH (physical HARQ indicator channel) resource can be derived from the lowest PRB index in the first slot of the corresponding PUSCH transmission. In addition, the PHICH resource can further depend on the reference-signal phase rotation (cyclic shift for DM-RS field in the most recent PDCCH associated with the PUSCH transmission) signaled as part of the uplink grant.

For the UL HARQ process with joint processing of the transport blocks on multiple CCs, ACK/NACK feedback on PHICH can be transmitted on the primary CC. In order to avoid ambiguity, the PHICH resource index can be derived from the first resource block index upon which the corresponding PUSCH occurred in the primary CC. Similarly, the cyclic shift value signaled in the uplink grant for PUSCH transmission on the primary CC can be used for the calculation of the PHICH resource index. This can apply when either independent (e)PDCCH or single (E)PDCCH is used for scheduling of the transport block transmission on multiple CCs.

Examples herein include one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

According to an example, a machine readable medium comprises instructions that, when executed, cause a User Equipment (UE) to: receive a configuration signal that indicates a joint transmission mode associated with a plurality of carriers, wherein each carrier comprises a distinct frequency range; receive one or more control channel messages that indicate uplink (UL) grants for the UE in a scheduled set of physical resources for each carrier of the plurality of carriers; generate a common transport block (TB); prepare, for each of the plurality of carriers, an associated physical layer encoding of the common TB; transmit, in each of the plurality of carriers, the associated physical layer encoding via the scheduled set of physical resources for that carrier; and receive a common hybrid automatic repeat request (HARQ) feedback message associated with the physical layer encodings.

In the above, the configuration signal that indicates the joint transmission mode is received via a downlink control information (DCI) message of the one or more control channel messages.

The invention is defined by the appended claims.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

## Claims

1. An apparatus configured to be employed within an Evolved NodeB, eNB, the apparatus comprising:
a processor configured to:
generate a transport block, TB;
prepare, for each of a plurality of carriers comprising distinct frequency ranges, an associated physical layer encoding of the TB, wherein each physical layer encoding of the TB uses the same redundancy version, RV, of the TB;
schedule each physical layer encoding of the TB to a set of physical resources on the associated carrier of the plurality of carriers; and
generate one or more control channel messages associated with the physical layer encodings;
transmitter circuitry configured to:
transmit the physical layer encodings via the scheduled sets of physical resources; and to
transmit the one or more control channel messages on at least one of the plurality of carriers, wherein the one or more control channel messages contains a configuration signal that indicates a joint transmission mode to a user equipment, UE,
and furthermore indicate downlink, DL, assignments for the UE which include a scheduled set of physical resources in each of the plurality of carriers; and
receiver circuitry configured to:
receive a single common hybrid automatic repeat request, HARQ, feedback message associated with the physical layer encodings, wherein the HARQ message comprises an acknowledgment, ACK, or a negative acknowledgment, NACK, in response to whether the transport block, TB, was successfully recovered by the UE in response tc two or more of received, by the UE, transmissions of the transmitted physical layer encodings via the scheduled sets of physical resources.

2. The apparatus of claim 1, wherein the plurality of carriers comprise at least one carrier comprising a licensed frequency range and at least one carrier comprising an unlicensed frequency range, and wherein the processor is configured to operate in a License Assisted Access, LAA, mode.

3. The apparatus of claim 1, wherein the processor is configured to operate in a carrier aggregation, CA, mode, wherein the plurality of carriers comprise a primary component carrier, CC, and at least one secondary CC.

4. The apparatus of any of claims 1-3, wherein a starting position in a circular buffer for rate matching of a second carrier of the plurality of carriers is aligned with an ending position in the circular buffer for rate matching of a first carrier of the plurality of carriers.

5. The apparatus of any of claims 1-3, wherein a starting position in a circular buffer for rate matching of each carrier of the plurality of carriers is aligned with a starting position associated with a redundancy version indicated for that carrier via the one or more control channel messages.

6. The apparatus of any of claims 1-5, wherein the one or more control channel messages comprise at least one physical downlink control channel, PDCCH, message or enhanced PDCCH, ePDCCH, message associated with each carrier of the plurality of carriers, wherein the transmitter circuitry is configured to transmit each of the one or more control channel messages on the associated carrier.

7. The apparatus of claim 6, wherein a first control channel message of the one or more control channel messages indicates a first redundancy version for a first carrier of the plurality of carriers, and wherein a second control channel message of the one or more control channel messages indicates a second redundancy version for a second carrier of the plurality of carriers.

8. An apparatus configured to be employed within a user equipment, UE, the apparatus comprising:
receiver circuitry configured to:
receive one or more control channel messages containing a configuration signal that indicates a joint transmission mode; wherein the one or more control channel messages indicate downlink, DL, assignments for the UE which include a scheduled set of physical resources in each of a plurality of carriers, wherein each carrier comprises a distinct frequency range;
receive transmissions via the scheduled sets of physical resources, and wherein two or more of the received transmissions are physical layer encodings of a transport block, TB,
wherein each physical layer encoding of the TB uses the same redundancy version, RV, of the TB;
a processor operably coupled to the receiver circuitry and configured to perform decoding on at least a subset of the two or more of the received transmissions to attempt recovery of the TB; and
transmitter circuitry configured to transmit a single common hybrid automatic repeat request, HARQ, message comprising an acknowledgment, ACK, or a negative acknowledgment, NACK, in response to the two or more of the received transmissions based on whether the TB was successfully recovered.

9. The apparatus of claim 8, wherein the one or more control channel messages are received via a physical downlink control channel, PDCCH, or enhanced PDCCH, ePDCCH, on a single carrier of the plurality of carriers.

10. The apparatus of claim 9, wherein the receiver circuitry is further configured to receive radio resource control, RRC, signaling that indicates that the one or more control signals are on the single carrier.

11. The apparatus of any of claims 9 or 10, wherein the one or more control signals comprise a single downlink control information, DCI, message that schedules each carrier of the plurality of carriers.

12. The apparatus of claim 11, wherein the compact DCI message comprises one or more common fields associated with each of the plurality of carriers.

13. The apparatus of claim 12, wherein the one or more common fields comprises at least one of a HARQ process number, a redundancy version, or a new data indicator.

14. The apparatus of any of claims 8-13, wherein the transmitter circuitry is configured to transmit the single HARQ message via a physical uplink control channel, PUCCH, with a PUCCH resource index based at least in part on a first control channel element associated with the control channel message of the one or more control channel messages that indicates the DL assignment for the UE in the scheduled set of physical resources for a primary carrier of the plurality of carriers.

15. The apparatus of any of claims 8-14, wherein the receiver circuitry is further configured to receive a second configuration signal that indicates a carrier aggregation, CA, mode simultaneously with the joint transmission mode, wherein a second received transmission of the received transmissions comprises a physical layer encoding of a second TB distinct from the TB, wherein the processor is further configured to perform decoding on the second received transmission to attempt recovery of the second TB, and wherein the transmitter circuitry is further configured to transmit a second HARQ message comprising the ACK or the NACK to the second received message based on whether the second TB was successfully recovered.

## Patentansprüche

1. Vorrichtung, die konfiguriert ist, innerhalb eines Evolved NodeB, eNB, verwendet zu werden, wobei die Vorrichtung umfasst:
einen Prozessor, der konfiguriert ist zum:
Erzeugen eines Transportblocks, TB;
Vorbereiten, für jeden einer Mehrzahl von Trägern, die unterschiedliche Frequenzbereiche umfassen, einer zugeordneten Physikalische-Schicht-Codierung des TB, wobei jede Physikalische-Schicht-Codierung des TB dieselbe Redundanzversion, RV, des TB verwendet;
Planen jeder Physikalische-Schicht-Codierung des TB auf einen Satz von physikalischen Ressourcen auf dem zugeordneten Träger der Mehrzahl von Trägern; und
Erzeugen einer oder mehrerer Steuerkanalnachrichten, die den Physikalische-Schicht-Codierungen zugeordnet sind;
Übertragungsschaltung, die konfiguriert ist zum:
Übertragen der Physikalische-Schicht-Codierungen über die geplanten Sätze von physikalischen Ressourcen; und
Übertragen der einen oder mehreren Steuerkanalnachrichten auf mindestens einer der Mehrzahl von Trägern,
wobei die eine oder mehreren Steuerkanalnachrichten ein Konfigurationssignal enthalten, das einen gemeinsamen Übertragungsmodus an ein Benutzergerät, UE, angibt,
und des Weiteren Downlink-, DL-, Zuweisungen für das UE angeben, die einen geplanten Satz von physikalischen Ressourcen in jedem der Mehrzahl von Trägern enthalten; und
Empfängerschaltung, die konfiguriert ist zum:
Empfangen einer einzelnen gemeinsamen Hybrid-Automatic-Repeat-Request-, HARQ- , Rückmeldungsnachricht, die den Physikalische-Schicht-Codierungen zugeordnet ist, wobei die HARQ-Nachricht eine Bestätigung, ACK, oder eine negative Bestätigung, NACK, aufweist, als Reaktion darauf, ob der Transportblock, TB, erfolgreich durch das UE als Reaktion auf zwei oder mehr empfangene, durch das UE, Übertragungen der übertragenen Physikalische-Schicht-Codierungen über die geplanten Sätze von physikalischen Ressourcen wiederhergestellt wurde.

2. Vorrichtung nach Anspruch 1, wobei die Mehrzahl von Trägern mindestens einen Träger umfasst, der einen lizenzierten Frequenzbereich umfasst, und mindestens einen Träger, der einen nicht lizenzierten Frequenzbereich umfasst, und wobei der Prozessor konfiguriert ist, in einem License-Assisted-Access-, LAA-, Modus zu arbeiten.

3. Vorrichtung nach Anspruch 1, wobei der Prozessor konfiguriert ist, in einem Trägeraggregations-, CA-, Modus zu arbeiten, wobei die Mehrzahl von Trägern einen primären Komponententräger, CC, und mindestens einen sekundären CC umfasst.

4. Vorrichtung nach einem der Ansprüche 1-3, wobei eine Startposition in einem Ringpuffer zur Ratenanpassung eines zweiten Trägers der Mehrzahl von Trägern mit einer Endposition im Ringpuffer zur Ratenanpassung eines ersten Trägers der Mehrzahl von Trägern ausgerichtet ist.

5. Vorrichtung nach einem der Ansprüche 1-3, wobei eine Startposition in einem Ringpuffer zur Ratenanpassung jedes Trägers der Mehrzahl von Trägern mit einer Startposition ausgerichtet ist, die einer Redundanzversion zugeordnet ist, die für diesen Träger über die eine oder mehreren Steuerkanalnachrichten angegeben ist.

6. Vorrichtung nach einem der Ansprüche 1-5, wobei die eine oder mehreren Steuerkanalnachrichten mindestens eine Physikalische-Downlink-Steuerkanal-, PDCCH-, Nachricht oder erweiterte PDCCH-, ePDCCH-, Nachricht umfassen, die jedem Träger der Mehrzahl von Trägern zugeordnet ist, wobei die Übertragungsschaltung konfiguriert ist, jede der einen oder mehreren Steuerkanalnachrichten auf dem zugeordneten Träger zu übertragen.

7. Vorrichtung nach Anspruch 6, wobei eine erste Steuerkanalnachricht der einen oder mehreren Steuerkanalnachrichten eine erste Redundanzversion für einen ersten Träger der Mehrzahl von Trägern angibt, und wobei eine zweite Steuerkanalnachricht der einen oder mehreren Steuerkanalnachrichten eine zweite Redundanzversion für einen zweiten Träger der Mehrzahl von Trägern angibt.

8. Vorrichtung, die konfiguriert ist, innerhalb eines Benutzergeräts, UE, verwendet zu werden, wobei die Vorrichtung umfasst:
Empfängerschaltung, die konfiguriert ist zum:
Empfangen einer oder mehrerer Steuerkanalnachrichten, die ein Konfigurationssignal enthalten, das einen gemeinsamen Übertragungsmodus angibt; wobei die eine oder mehreren Steuerkanalnachrichten Downlink-, DL-, Zuweisungen für das UE angeben, die einen geplanten Satz von physikalischen Ressourcen in jedem einer Mehrzahl von Trägern enthalten, wobei jeder Träger einen unterschiedlichen Frequenzbereich umfasst;
Empfangen von Übertragungen über die geplanten Sätze von physikalischen Ressourcen, und wobei zwei oder mehr der empfangenen Übertragungen Physikalische-Schicht-Codierungen eines Transportblocks, TB, sind, wobei jede Physikalische-Schicht-Codierung des TB dieselbe Redundanzversion, RV, des TB verwendet;
einen Prozessor, der betriebsfähig mit der Empfängerschaltung gekoppelt ist und konfiguriert ist, eine Decodierung an mindestens einem Teilsatz der zwei oder mehr der empfangenen Übertragungen durchzuführen, um eine Wiederherstellung des TB zu versuchen; und
Übertragungsschaltung, die konfiguriert ist, eine einzelne gemeinsame Hybrid-Automatic-Repeat-Request-, HARQ-, Nachricht, die eine Bestätigung, ACK, oder eine negative Bestätigung, NACK, umfasst, als Reaktion auf die zwei oder mehr der empfangenen Übertragungen basierend darauf, ob der TB erfolgreich wiederhergestellt wurde, zu übertragen.

9. Vorrichtung nach Anspruch 8, wobei die eine oder mehreren Steuerkanalnachrichten über einen physikalischen Downlink-Steuerkanal, PDCCH, oder erweiterten PDCCH, ePDCCH, auf einem einzelnen Träger der Mehrzahl von Trägern empfangen werden.

10. Vorrichtung nach Anspruch 9, wobei die Empfängerschaltung des Weiteren konfiguriert ist, eine Funkressourcensteuerungs-, RRC-, Signalisierung zu empfangen, die angibt, dass sich das eine oder die mehreren Steuersignale auf dem einzelnen Träger befinden.

11. Vorrichtung nach einem der Ansprüche 9 oder 10, wobei das eine oder die mehreren Steuersignale eine einzelne Downlink-Steuerinformations-, DCI-, Nachricht umfassen, die jeden Träger der Mehrzahl von Trägern plant.

12. Vorrichtung nach Anspruch 11, wobei die kompakte DCI-Nachricht ein oder mehrere gemeinsame Felder umfasst, die jedem der Mehrzahl von Trägern zugeordnet sind.

13. Vorrichtung nach Anspruch 12, wobei das eine oder die mehreren gemeinsamen Felder mindestens eines von einer HARQ-Prozessnummer, einer Redundanzversion oder einem neuen Datenindikator umfassen.

14. Vorrichtung nach einem der Ansprüche 8-13, wobei die Übertragungsschaltung konfiguriert ist, die einzelne HARQ-Nachricht über einen physikalischen Uplink-Steuerkanal, PUCCH, mit einem PUCCH-Ressourcenindex zu übertragen basierend zumindest teilweise auf einem ersten Steuerkanalelement, das der Steuerkanalnachricht der einen oder mehreren Steuerkanalnachrichten zugeordnet ist, die die DL-Zuweisung für das UE im geplanten Satz von physikalischen Ressourcen für einen primären Träger der Mehrzahl von Trägern angibt.

15. Vorrichtung nach einem der Ansprüche 8-14, wobei die Empfängerschaltung ferner konfiguriert ist, ein zweites Konfigurationssignal zu empfangen, das einen Trägeraggregations-, CA-, Modus gleichzeitig mit dem gemeinsamen Übertragungsmodus angibt, wobei eine zweite empfangene Übertragung der empfangenen Übertragungen eine physikalische-Schicht-Codierung eines zweiten TB umfasst, der sich vom TB unterscheidet, wobei der Prozessor ferner konfiguriert ist, eine Decodierung der zweiten empfangenen Übertragung durchzuführen, um eine Wiederherstellung des zweiten TB zu versuchen, und wobei die Übertragungsschaltung ferner konfiguriert ist, eine zweite HARQ-Nachricht, die die ACK oder die NACK umfasst, an die zweite empfangene Nachricht basierend darauf zu übertragen, ob der zweite TB erfolgreich wiederhergestellt wurde.

## Revendications

1. Un appareil configuré pour être utilisé au sein d'un eNB évolué, l'appareil comprenant :
un processeur configuré pour :
générer un bloc de transport, TB ;
préparer, pour chacune d'une pluralité de porteuses avec des plages de fréquences distinctes, un codage de couche physique associée du TB, chaque codage de couche physique du TB utilisant la même version de redondance, RV, du TB ;
planifier chaque codage de couche physique du TB vers un ensemble de ressources physiques sur la porteuse associée de la pluralité de porteuses ; et
générer un ou plusieurs messages de canal de contrôle associés aux codages de couche physique ;
une circuiterie émettrice configurée pour :
émettre les codages de couche physique via les ensembles planifiés de ressources physiques ; et pour émettre les un ou plusieurs messages de canal de contrôle sur au moins l'une de la pluralité de porteuses, les un ou plusieurs messages de canal de contrôle contenant un signal de configuration qui indique un mode d'émission conjoint vers un équipement utilisateur, UE, et indique en outre des attributions de liaison descendante, DL, pour l'UE qui comprennent un ensemble planifié de ressources physiques dans chacune de la pluralité de porteuses ; et
une circuiterie réceptrice configurée pour :
recevoir un unique message de retour de requête de répétition automatique hybride commune, HARQ, associé aux codages de couche physique, le message HARQ comprenant un accusé de réception, ACK, ou un accusé de réception négatif, NACK, en réponse au fait que le bloc de transport, TB, a été ou non récupéré avec succès par l'UE en réponse à deux ou plus des transmissions reçues, par l'UE, des codages de couches physiques transmis via les ensembles planifiés de ressources physiques.

2. L'appareil de la revendication 1, dans lequel la pluralité de porteuses comprend au moins une porteuse avec une plage de fréquences sous licence et au moins une porteuse avec une plage de fréquences sans licence, et dans lequel le processeur est configuré pour opérer en un mode d'accès assisté en licence, LAA.

3. L'appareil de la revendication 1, dans lequel le processeur est configuré pour opérer en un mode d'agrégation de porteuses, CA, la pluralité de porteuses comprenant une porteuse composante, CC, primaire et au moins une CC secondaire.

4. L'appareil de l'une des revendications 1 à 3, dans lequel une position de départ dans un tampon circulaire pour adaptation des débits d'une seconde porteuse de la pluralité de porteuses est alignée sur une position de fin dans le tampon circulaire pour adaptation des débits d'une première porteuse de la pluralité de porteuses.

5. L'appareil de l'une des revendications 1 à 3, dans lequel une position de départ dans un tampon circulaire pour adaptation des débits de chaque porteuse de la pluralité de porteuses est alignée sur une position de départ associée à une version de redondance indiquée pour cette porteuse via les un ou plusieurs messages de canal de contrôle.

6. L'appareil de l'une des revendications 1 à 5, dans lequel les un ou plusieurs messages de canal de contrôle comprennent au moins un message de canal de contrôle de liaison descendante physique, PDCCH, ou un message PDCCH renforcé, ePDCCH, associé à chaque porteuse de la pluralité de porteuses, la circuiterie émettrice étant configurée pour transmettre chacun des un ou plusieurs messages de canal de contrôle sur la porteuse associée.

7. L'appareil de la revendication 6, dans lequel un premier message de canal de contrôle des un ou plusieurs messages de canal de contrôle indique une première version de redondance pour une première porteuse de la pluralité de porteuses, et dans lequel un second message de canal de contrôle des un ou plusieurs messages de canal de contrôle indique une seconde version de redondance pour une seconde porteuse de la pluralité de porteuses.

8. Un appareil configuré pour être employé au sein d'un équipement utilisateur, UE, l'appareil comprenant :
une circuiterie réceptrice configurée pour :
recevoir un ou plusieurs messages de canal de contrôle contenant un signal de configuration qui indique un mode de transmission conjoint, les un ou plusieurs messages de canal de contrôle indiquant des attributions de liaison descendante, DL, pour l'UE qui comprennent un ensemble planifié de ressources physiques dans chacune d'une pluralité de porteuses, chaque porteuse comprenant une plage de fréquences distinctes ;
recevoir des transmissions via les ensembles planifiés de ressources physiques, et deux ou plus des transmissions reçues étant des codages de couche physique d'un bloc de transport, TB, chaque codage de couche physique du TB utilisant la même version de redondance, RV, du TB ;
un processeur couplé de manière opérante à la circuiterie réceptrice et configuré pour effectuer un décodage sur au moins un sous-ensemble des deux ou plus des transmissions reçues pour essayer de récupérer le TB ; et
une circuiterie émettrice configurée pour transmettre un unique message de requête de répétition automatique hybride, HARQ, commune comprenant un accusé de réception, ACK, ou un accusé de réception négatif, NACK, en réponse aux deux ou plus des transmissions reçues sur la base de ce que le TB a été ou non récupéré avec succès.

9. L'appareil de la revendication 8, dans lequel les un ou plusieurs messages de canal de contrôle sont reçus via un canal de contrôle de liaison descendante physique, PDCCH, ou via un PDCCH renforcé, ePDCCH, sur une unique porteuse de la pluralité de porteuses.

10. L'appareil de la revendication 9, dans lequel la circuiterie réceptrice est en outre configurée pour recevoir une signalisation de contrôle de ressource radio, RRC, qui indique que les un ou plusieurs signaux de contrôle sont sur la porteuse unique.

11. L'appareil de l'une des revendications 9 ou 10, dans lequel les un ou plusieurs signaux de contrôle comprennent un unique message d'information de contrôle de liaison descendante, DCI, qui planifie chaque porteuse de la pluralité de porteuses.

12. L'appareil de la revendication 11, dans lequel le message DCI compact comprend un ou plusieurs champs associés à chacune de la pluralité de porteuses.

13. L'appareil de la revendication 12, dans lequel les un ou plusieurs champs communs comprennent au moins l'un d'entre un numéro de processus HARQ, une version de redondance, ou un indicateur de nouvelles données.

14. L'appareil de l'une des revendications 8 à 13, dans lequel la circuiterie émettrice est configurée pour transmettre le message HARQ unique via un canal de contrôle de liaison montante physique, PUCCH, avec un index de ressource PUCCH au moins en partie basé sur un premier élément de canal de contrôle associé au message de canal de contrôle des un ou plusieurs messages de canal de contrôle qui indique l'attribution DL pour l'UE dans l'ensemble planifié de ressources physiques pour une porteuse primaire de la pluralité de porteuses.

15. L'appareil de l'une des revendications 8 à 14, dans lequel la circuiterie réceptrice est en outre configurée pour recevoir un second signal de configuration qui indique un mode d'agrégation de porteuse, CA, en même temps que le mode de transmission conjoint, dans lequel une seconde transmission reçue des transmissions reçues comprend un codage de couche physique d'un second TB distinct du TB, dans lequel le processeur est en outre configuré pour effectuer un décodage sur la seconde transmission reçue pour tenter de récupérer le second TB, et dans lequel la circuiterie émettrice est en outre configurée pour transmettre un second message HARQ comprenant l'ACK ou le NACK au second message reçu sur la base du fait que le second TB a été ou non récupéré avec succès.
